# EUROPEAN PATENT APPLICATION

(11) **EP 1 307 055 A2**
(43) Date of publication of application: **02.05.2003**
(21) Application number: 02079314.7
(22) Date of filing: 17.10.2002
(51) Int. Cl.: H04N 9/11

(54) **Method for calibrating a motion picture film scanner**

(30) Priority: 29.10.2001 US 45829
(71) Applicant: EASTMAN KODAK COMPANY, Rochester, New York 14650 (US)
(72) Inventor: Cirulli, Robert J., c/o Eastman Kodak Company, Rochester, New York 14650-2201 (US); Alvut, Kyle J., c/o Eastman Kodak Company, Rochester, New York 14650-2201 (US); Mendel, Maryann M., c/o Eastman Kodak Company, Rochester, New York 14650-2201 (US)
(74) Representative: Haile, Helen Cynthia

(57) **Abstract**

In calibrating a motion picture film scanner, a calibration element is provided that is composed of a multi-step neutral gray series comprised of a plurality of known density patches, each corresponding to one or more prescribed aim voltages, that substantially represent the full density vs. exposure range of a photographic element. The calibration element is scanned with the motion picture film scanner and one or more signal voltages are generated for each density patch. The motion picture film scanner is then adjusted to bring the signal voltages toward the prescribed aim voltages, thereby generating one or more adjustments that compensate for errors from the prescribed aim voltages and capture substantially the full range of the motion picture film. Since each motion picture film that is scanned by the film scanner is a particular film stock, i.e., a particular film type, the calibration further includes applying a custom correction to the output of the motion picture film scanner for the particular film type being scanned. The custom correction may be a neutral scale correction provided by a one-dimensional look up table.

## Description

### FIELD OF THE INVENTION

The invention relates generally to improvements in the field of film scanning, and in particular to the calibration and use of a telecine transfer device for transfer of a motion picture film to a video signal.

### BACKGROUND OF THE INVENTION

As motion picture film is shot for television or features work it is well known that film dailies or rushes are viewed by a variety of people including the director and producer to determine which takes will be used in their productions. Programs originating on film, and made specifically for the television market, are transferred from film to video using a telecine transfer device. Video dailies obtained from a telecine transfer device are also finding a place in features work replacing some of the film dailies usually viewed.

Various types of telecine transfer devices are described in *Engineering Handbook*, E.O. Fritts, Ed., 8^{th} edition, National Association of Broadcasters, 1992, Chapter 5.8, pp. 933-946, the disclosure of which is incorporated by reference. The most popular of such devices generally employ either a flying spot scanner using photomultiplier tube detectors, or arrays of charged-coupled devices, also called CCD sensors. CCD sensors include either an area array scanner (which captures the full frame at once) or a linear line scanner (in which the film is transported across a line array of sensors and the total image is then a reconstruction of all the lines to give an area image). Telecine transfer devices scan each negative or positive film frame and transform the transmittance at each pixel of an image into a voltage. The signal processing then inverts the electrical signal in the case of a transfer made from a negative film in order to render a positive image. The signal is carefully amplified and modulated, and fed into a cathode ray tube monitor to display the image, or recorded onto magnetic tape for storage. The monitor is typically a high definition (HD) monitor with the data incorporating the characteristics of the monitor such that the video image is pleasing to the operator.

A colorist operates a telecine transfer device by adjusting the telecine settings, which include gain, gamma, lift, illumination, matching whites, and matching blacks, to allow for the scene to be captured on the video tape correctly. This is a time consuming process that is done scene-by-scene and produces results that may clip out some of the available data that is on the film. Once this happens, the film may have to be rescanned to recover the lost information. Also, since there are a number of telecine controls, rescanning scenes can introduce a different color position depending on which colorist or telecine transfer device is used for this rescan operation.

There are several test films that have been developed to aid the colorist in the initial setup or starting point for a film to video telecine transfer. Eastman Kodak Company's Telecine Analysis Film (TAF), which includes a gray scale and some color patches, is used to set up a known position for the telecine transfer device (Kodak Publication No. H-822). The colorist will look at a vector scope and waveform monitor and adjust the telecine controls to meet the TAF criteria. At this point a limited color space and gray scale have been set for a video starting position to grade the scanned scenes. The colorist will then color grade each scene using a telecine color grading controller, trying to preserve as much information as possible that is present on the film.

A second film that Eastman Kodak Company produces is called a Telecine Exposure Calibration (TEC) Film which provides a colorist with a tool to determine exposure conditions for a scene similar to printer lights that are used in traditional film laboratories. (Such a calibration film is described in commonly-assigned U.S. Patent No. 6,115,062, which is incorporated herein by reference; this patent also describes "printer light" information, which are values related to an ideal exposure that assist a cinematographer/director of photography to determine whether the scenes were shot with a satisfactory exposure.) By aligning the tonal scale of the telecine transfer device to TEC film, a standard exposure calibration can be established helping the colorist provide the cinematographers with consistent exposure information. The TEC and TAF films are used as complimentary tools to aid the colorist in a telecine transfer. Each film has a set of instructions for the colorist to manually set up the telecine transfer device for proper transfer.

Another method, which is described in U.S. Patent No. 6,034,721, helps a colorist to set up a telecine transfer device for correct exposure calibration by using film scenes in which a "decoy surface" is inserted in the scene, thereby presenting a distortion that is complimentary to the desired effect. When the colorist is color grading the scene, the decoy would be used as the neutral gray position (however, the decoy may indeed be an effect that the cinematographer was filming). This allows the colorist to have what is perceived to be a correct neutral, and to preserve the effect throughout the scene.

An automated method for setting up a telecine transfer device using a telecine color grading controller and stored reference images, and also using a graphical user interface (GUI) and a host computer, is described in U.S. Pat. No. 5,874,988. This system uses reference image information, an image analyzer that computes statistical parameters, and the source image to determine corrections to the telecine setup. These corrections are utilized to control color parameters of the source images to match the reference image through an iterative process. The GUI allows for the operator to select the reference image, black, gamma, and gain parameters along with spot size selection. Although this method is said to be automated, the colorist still must use a GUI interface to select parameters for proper telecine setup.
As described in E.P Patent Application No. EP0947955A2, a telecine color grading controller incorporates a method for generating custom settings in real time for input/output relationships for the gain, gamma and lift parameters of the luminance RGB primaries A graphical user interface (GUI) allows the colorist to select various points on a given gamma curve to add to or reshape the gamma response of a particular record and store these parameters in a lookup table (LUT) stored in random access memory (RAM). This control can be used in a creative color grading session and is not normally adjusted for initial telecine calibration.

More decisions are being made from viewing video dailies in the industry today. Despite the aforementioned techniques, the amount of latitude in setting up the telecine controls for dailies work can cause clipping of data as well as viewing of a flat image on the monitor. The colorist may then have to color grade each scene, spending more telecine time and consequently adding more expense to the production job. What is needed is a one-time automatic calibration method for setting up a telecine transfer device such that the full dynamic range of the motion picture color negative film is available when scanned to video, thereby maintaining scanning consistency of motion picture film to video without compromising the film's inherent dynamic range.

### SUMMARY OF THE INVENTION

An object of this invention is to provide a calibration method for setting up a telecine transfer device such that the full dynamic range of the motion picture color negative film is available when scanned to video.

A further object of this invention is to modify the scanned video data according to film type for correct capture on video tape and viewing on a calibrated video monitor.

A further object of the invention is to set up a telecine transfer device to make a single scan to video for purpose of video dailies, without having to rescan the film or make scene by scene adjustments.

The present invention is directed to overcoming one or more of the problems set forth above. Briefly summarized, according to one aspect of the present invention, in calibrating a motion picture film scanner, a calibration element is provided that is composed of a multi-step neutral gray series comprised of a plurality of known density patches, each corresponding to one or more prescribed aim voltages, that substantially represent the full density vs. exposure range of a photographic element. The calibration element is scanned with the motion picture film scanner and one or more signal voltages are generated for each density patch. The motion picture film scanner is then adjusted to bring the signal voltages toward the prescribed aim voltages, thereby generating one or more adjustments that compensate for errors from the prescribed aim voltages and capture substantially the full range of the motion picture film.

Since each motion picture film that is scanned by the film scanner is a particular film stock, i.e., a particular film type, the method further includes the step of applying a custom correction to the output of the motion picture film scanner for the particular film type being scanned. The film-stock dependent custom correction may be a neutral scale correction provided by a one-dimensional look up table. Together, these settings provide a "one light" or "best light" setup for the film scanner, which are phrases borrowed from the optical printing world and understood in the trade to refer to setting up an output device (i.e., motion picture printer) once (for one light setting) and running the whole motion picture film through the device at those settings.

According to another aspect of the invention, in a color grading system for color grading a video signal generated from a motion picture film, wherein the film includes a code indicative of the film type, the invention comprises a decoding system for decoding the film type from the code on the motion picture film and a processor for applying film-type dependent neutral scale corrections to the video signal in response to the decoded film type. Furthermore, a storage device may store a plurality of neutral scale corrections for different film types, and the processor then selects the appropriate correction from the storage device in response to the decoded film type.

An important advantage of this invention is having a known good telecine setup position provided through the calibration process, thereby consistently allowing all the information on the color negative film to be scanned properly, and additionally applying the appropriate film type corrections for video capture and display. The latter feature is accomplished by applying corrections (e.g., in the form of look up tables (LUTs)) to the scanned video using the film type as the selection criteria. A 3x3 matrix may also be applied for color correction.

A further advantage of the invention is that an auto-calibrated one time (called "one light" in the trade) video setup streamlines the video dailies process by capturing the full dynamic range of the film while automatically loading LUTs for the correct film stock scanned. A 3x3 matrix can then be applied to this video stream for correct capture and viewing of the scanned scene.

In summary, this invention provides tools to enable an easily automated method for calibration of a telecine transfer device, along with a correct video position for scanning motion picture film.

These and other aspects, objects, features and advantages of the present invention will be more clearly understood and appreciated from a review of the following detailed description of the preferred embodiments and appended claims, and by reference to the accompanying drawings.

### BRIEF DESCRIPTION OF THE DRAWINGS

FIG. 1 is an illustration of a calibration film strip having a 21-step neutral gray scale series exposed in a full aperture film frame.
FIG. 2 is a density-log exposure graph illustrating the 21-step neutral gray scale series for red, green and blue channels of a typical motion picture film plotted density vs. patch number.
FIG. 3 is a diagram of a post-production system including a telecine transfer device set up in accordance with the invention to capture the inherent dynamic range of the photographic film element and correct for the display according to the identified film type.
FIG. 4 is a graph of input and output code values illustrating a look up table (LUT) used in the system shown in FIG. 3 for a particular motion picture film type.
FIGS. 5A and 5B are flow diagrams of the calibration and scanning processes, respectively, according to the invention.

### DETAILED DESCRIPTION OF THE INVENTION

Because telecine and other film scanning and transfer devices are well known, the present description will be directed in particular to elements forming part of, or cooperating more directly with, the calibration and scanning techniques applied to a telecine transfer device or a motion picture film scanner in accordance with the present invention. Elements not specifically shown or described herein may be selected from those known in the art. Certain aspects of the embodiments to be described may be provided in software. Given the system as shown and described according to the invention in the following materials, software not specifically shown, described or suggested herein that is useful for implementation of the invention is conventional and within the ordinary skill in such arts.

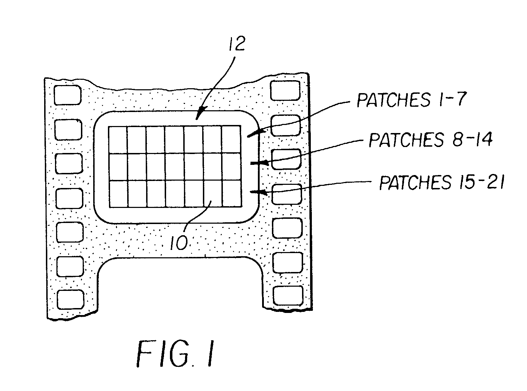

In order to completely describe a motion picture color negative tone scale, a multi-step neutral gray scale series is made by using a conventional sensitometric type of exposing device. While there is no particular requirement for the number of steps, a 21 step neutral gray scale series has been found to provide adequate coverage. This tone scale strip consists of 21 red, green and blue (RGB) densities (each patch having a unique RGB density) giving what is commonly referred to as a D-logE (density vs. log exposure) curve. Using this density metric as a reference, a telecine transfer device can be made to emulate this film response thus allowing for a range of densities from minimum (Dmin) to maximum (Dmax) to be captured and displayed on a calibrated video monitor. Figure 1 illustrates an example of what a 21-step neutral gray scale series might look like with each density patch 10 aligned such that all 21 steps can be exposed as a calibration strip 12 in a full aperture film frame. (This particular patch arrangement is only for convenience, e.g., the patches could be in a series of frames or otherwise arranged.) Each step 10 in the density patch series has a unique RGB density level consistent with the exposure given by the sensitometric exposing device, and corresponds to a particular set of aim voltages that will be produced by a properly calibrated telecine transfer device scanning the same patch.

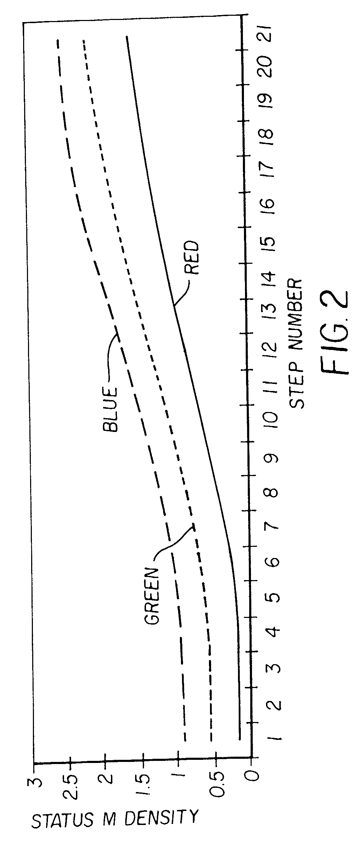

Figure 2 illustrates a typical 21-step neutral gray scale series for the red, green and blue channels plotted density vs. patch number for a typical motion picture film. It is seen that the entire film curve is again present in the series to allow for the range needed for correct telecine transfer. Scenes with exposures that have detail in the blacks will be maintained through the toe of the curve for later creative decisions as well as specular highlights in the shoulder of the curve. The full latitude of the film's exposure is kept throughout the entire exposure range. In a particular feature of the invention, the density vs. patch number plot shown in Figure 2 is produced for a typical motion picture film (e.g., Eastman Kodak Company 5293 color negative film), and the specific adjustments for another film type are made through a custom correction (e.g., the one-dimensional look up tables (1D LUTs) that will be subsequently described). Accordingly, the 21-step neutral gray scale series shown in Figure 1 then becomes a generic calibration strip that can be used for a number of different motion picture film types that might be run through the telecine transfer device.

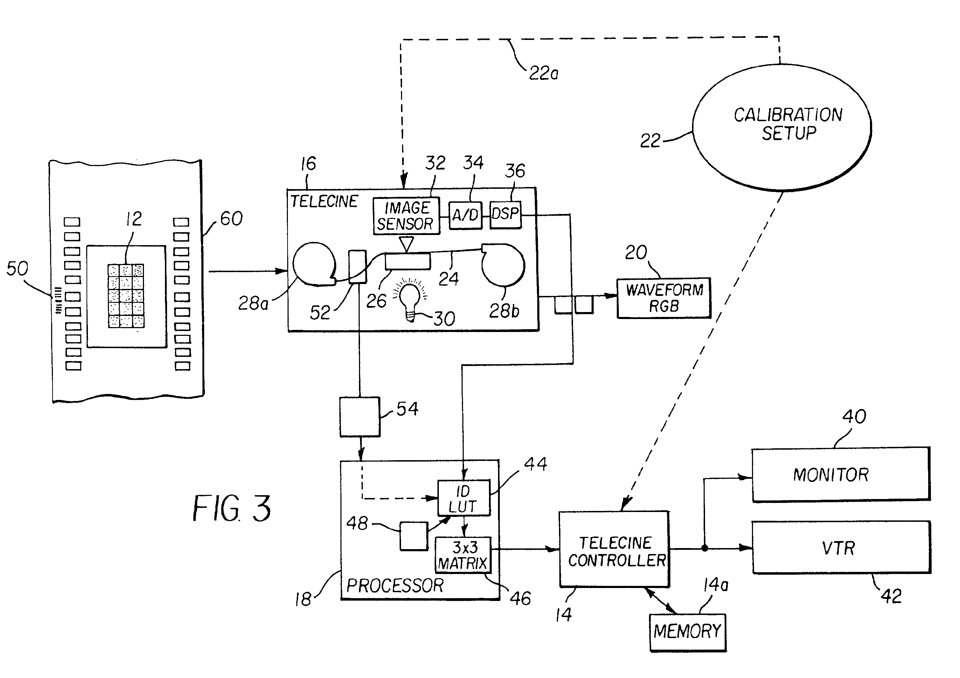

It is well known that a telecine color grading controller is a critical piece of equipment that a colorist uses for telecine primary control as well as for color correction in a secondary color grading session. Such controllers are well known in the industry and available from a variety of sources: examples include the da Vinci 2K color enhancement system available from da Vinci Systems, Inc. and the Pogle Platinum system available from Pandora International Ltd. Referring to Figure 3, a telecine color grading controller 14 is connected into the output video stream from a telecine transfer device 16 via a custom film type processor 18. An example of a telecine transfer device, also know as a motion picture film scanner, is the Spirit DataCine™ available from THOMSON Multimedia Broadcast & Network Solutions. Along with the telecine color grading controller 14, there are associated devices such as a vector scope and waveform monitor 20 that are used to view changes that are made to the telecine primary controls. These primary controls set parameters such as illumination, matching blacks, matching whites, lift, gamma, gain, master whites, and master blacks, which may be manually adjusted through the telecine color grading controller 14 to allow for correct film transfer.

In accordance with the invention, a calibration setup process 22 uses the telecine color grading controller 14 to determine from the 21-step neutral gray scale calibration strip 12 which patches are out of tolerance from the aim voltages. The telecine primary controls are then adjusted in order to place each density patch 10 on the strip 12 in correct accord with the prescribed aim voltages. The settings of the primary controls, representing the overall new telecine position, can then be saved in a memory 14a associated with the telecine color grading controller 14 for future film transfer sessions. The process involves using the telecine transfer device to read the calibration strip 12 and the patches 10, converting the resulting values read from each patch into signal voltages, and adjusting the primary controls via the controller 14 until the signal voltages are brought into correspondence with the prescribed aim voltages. Since there are a number of primary controls, and adjustments to one control with regard to one patch may affect the signal voltage of another patch, the process follows an iterative pattern of adjustments, gradually bringing the signal voltages closer to aim voltages until all the patches are substantially at aim. While the calibration setup process may be manual, in accordance with another embodiment of the invention, the calibration setup process 22 may be an automated calibration system that uses the telecine color grading controller 14 to determine from the 21-step neutral gray scale calibration image 12 which patches are out of tolerance from the aim voltages, and then to automatically iterate the adjustments until the system is brought into aim.

Together, these adjustments provide a "one light" or "best light" setup for the telecine transfer device 16, which refers to setting up the telecine transfer device 16 once and then running a motion picture film through the device 16 at those settings (with changes for the film stock automatically keyed into the process via the 1D LUTs, which will be subsequently described). While not a part of the calibration process described herein, the video signal resulting from the calibrated scanning can be subsequently input to a color grading process, e.g., a subsequent tape to tape color grading, where creative decisions can be made about scene color rendering and the like.

Referring to the telecine transfer device 16 in more detail, a film transport advances a motion picture film 24 at a substantially uniform speed through a film gate 26 from a supply reel 28a to a take up reel 28b. A light source 30 generates a light beam that is focused upon a linear section of the film 24 in the film gate 26. The light is modulated by the image in the film 24 and transmitted through an objective lens to an image sensor 32. More specifically, in one current embodiment of the telecine transfer device, one portion of the light is transmitted to an unsharp color sensor and the other portion reflected to a high resolution luminance sensor, which are both included in the box shown as the image sensor 32. The color sensor comprises three linear color arrays respectively sensitive to red, green and blue light. The luminance sensor includes a linear array sensitized to light having a spectral composition approximating a luminance function. The image data from these arrays is provided to an analog-to-digital (A/D) converter and high definition signal generation section 34.

In the A/D converter and signal generation section 34, since the digital color values represent lower resolution data than the digital luminance values, additional color values are generated in both the horizontal and vertical directions. Meanwhile, high frequency detail is extracted from the luminance data and added to each channel of color, forming thereafter a full resolution, three channel, high definition color output signal. This high definition digital signal is applied to a digital processor 36, which can apply the primary control adjustments to the high resolution signal as determined from the telecine color grading controller 14 through the calibration setup process 22. A colorist would operate the telecine controls on the telecine controller 14 to adjust the aforementioned primary control parameters, i.e., the illumination, matching blacks, matching whites, lift (dark areas), gamma (mid-tone), gain (highlights), master whites, and master blacks, for the images produced by the high resolution digital signal; these primary parameter control signals are then applied via a connection 22a to the telecine transfer device 16, where the corresponding adjustments to the video signal voltages are made by the digital processor 36.

The full resolution, three channel, high definition color output signal from the digital processor 36 is further processed in the custom film type processor 18 and output as a video signal to a calibrated high definition monitor 40 and/or to a video tape recorder (VTR) 42. Although not intended as a limitation, in the preferred embodiment the video signal is high definition video (HD) or high resolution HD video. More specifically, some of the HD standards are considered video master resolution and video meeting those standards can be used in further video mastering applications. For instance, the high resolution HD video master can be used to generate other forms of media, such as DVD, CD VHS, and the like. Such a master can also be used for digital projection as well as converted to data for recording back out to film.

The high definition monitor 40 is typically calibrated to a recommended practice, such as SMPTE recommended practice RP 145-1999, which correctly establishes the primary color rendition. However, film scenes, which have been scanned at this point by the telecine transfer device 16, will ordinarily appear flat in appearance when captured and viewed on the calibrated video monitor 40. To allow for a correct video picture representation, a film stock dependant, one-dimensional 10 bit RGB lookup table 44 (1D LUT) is applied to the scanned video stream.

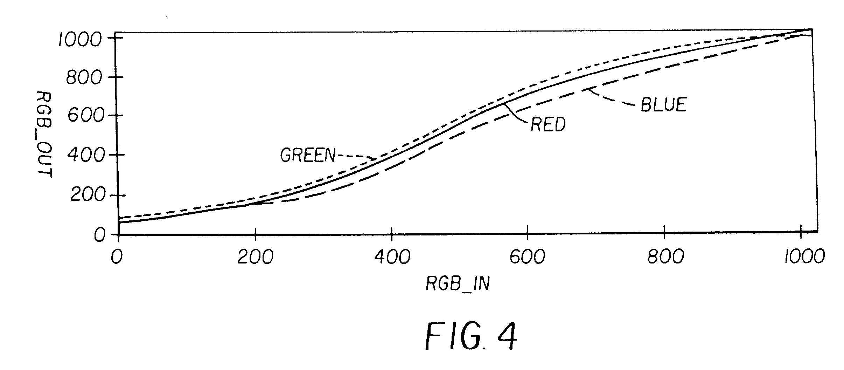

Each film stock (which herein is taken to be equivalent to film type) run through the telecine transfer device 16 will usually have its own optimum 1D LUT 44. For instance, Figure 4 illustrates a plot of the input code values vs. output code values for a 1D LUT for the red, green and blue channels of Eastman Kodak Company 5293 Color Negative 200T motion picture film. In general, these values are empirically determined by setting the neutral scale to produce a proper looking picture, and the curve shape is further adjusted so that blacks, whites and skin tones also look proper.

In a further optional feature of the invention, a 3x3 matrix 46 can be applied to the video stream for color correction purposes, in particular to correct for non-linear interimage effects. Color correction is typically applied through a 3x3 matrix, which represents a mathematical means for transformation from one color to another. In some cases no transformation is desired; applying a unity matrix will allow the video stream to pass through without any modification.

In the preferred embodiment, application of the 1D LUT 44 (and the optional 3x3 color matrix 46) is applied in the separate custom film type processor 48; alternatively, the specialized 1D LUT 44 (and the 3x3 matrix 46) may be applied in a telecine color grading controller 14 that is correctly configured to offer these choices. Film-stock dependent adjustment and correction is enabled by storing a plurality of corresponding 1D LUTs in a LUT storage 48. The identity of the film type of the filmstock currently being scanned by the telecine transfer device 16 is determined by the Keycode™ identification, which is a barcode 50 present on the edge of many motion picture film stocks. The Keycode™ identification on the film 24 is scanned by a code reader 52 in the telecine transfer device 16 and decoded in a decoder 54. The decoded data identifies the film type being scanned on the telecine transfer device and enables retrieval of the appropriate 1D LUT 44 from the storage 48. Since the Keycode™ identification is constantly being read on the scanned film 20, this allows for an automatic updating of the 1D LUT 44 as different film types are detected. In the preferred embodiment, film type processing takes place in the custom film type processor 18; alternatively, processing may occur in the telecine color grading controller 14 or in the telecine transfer device 16 dependant on the particular system configuration.

Figure 3 illustrates calibration derived from the 21-step neutral gray scale 12 used for the telecine video setup, as applied to the video signal through the 1D LUT 44 and the optional 3x3 matrix 46 and ultimately output to the high definition monitor 40 and/or the video tape recorder (VTR) 42. During calibration of the telecine transfer device, a calibration film element 60 (containing the calibration strip 12 as shown in Figure 1) is run through the film gate 26 and scanned. In practice, the actual specific calibration of the telecine transfer device for a variety of filmstocks would use the calibration film element 60 as an approximate generic calibration in combination with a film-stock dependant correction. Thus, to allow for a correct video picture representation, the appropriate film stock dependant, one-dimensional RGB 1D LUT 44 is applied to the calibrated, scanned video stream. In addition, the 3x3 matrix 46 allows for a specialized, optional color correction.

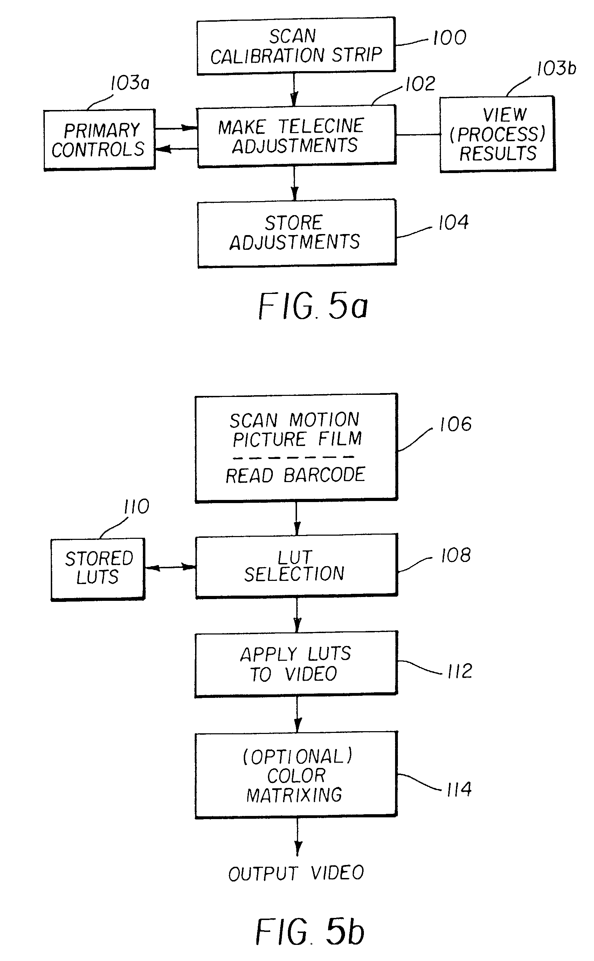

In practice, referring to Figures 5A and 5B, the methodology for properly transferring scenes from any color negative film on the telecine transfer device 16 is shown to comprise the following steps, beginning with the calibration phase of the process, as shown in Figure 5A:
- in a calibration scanning step 100, scanning calibration density patches corresponding to the 21-step neutral gray scale series 12 and generating signal voltages corresponding thereto ;
- in the telecine adjustment step 102, calibrating the telecine transfer device 16 to prescribed aim voltages from the density patches, preferably using an automated iterative process, thereby generating setup adjustments. This involves iteratively adjusting the primary controls 103a and viewing, or otherwise automatically utilizing, the results 103b until the signal voltages approach, or reach, the prescribed aim voltages;
- in a storage step 104, storing the telecine setup adjustments. Now that calibration is completed, the next phase of the process is the scanning of the motion picture film, as shown in Figure 5B;
- in a film scanning step 106, scanning scenes from a color negative film and reading the Keycode™ (barcode) data from the film indicative of film type;
- in a LUT selection step 108, selecting a correct 1D LUT from a plurality of stored LUTs 110 for the film type, based on the scanned Keycode™ data, and applying (112) the 1DLUT dynamically to the video stream from the telecine transfer device 16; and
- in an optional matrixing step 110, applying a 3x3 matrix if needed for correct capture and viewing of the scanned scene.

Prior to the calibration scanning step 100, the reference 21-step neutral gray scale series comprised of known densities is exposed on a calibrated sensitometric type device to produce a density range that covers 0 to 4 logE negative exposure range and is processed in a standard Eastman color negative process. A full frame exposure preferably will have 21 individual density patches covering the 0 to 4 logE exposure range for calibration of the telecine transfer device.

Pursuant to scanning in the calibration scanning step 100, the red, green and blue density components of the 21-step neutral gray scale series are converted to voltages covering, e.g., the range from 0 to 700 mv (millivolts). This represents scene information from the blacks or shadows to the whites or highlights. The 21 step neutral series is scanned on the telecine transfer device and statistically measured in the telecine adjustment step 102 to determine errors from the prescribed aim voltages. The primary controls of the telecine transfer device are then adjusted (preferably, automatically) in the telecine adjustment step 102 to compensate for these errors, placing the scanner in a correct metric to capture all of the scene information present on the negative film.

More specifically, the TAF film is used to set up the telecine transfer device in such a way that the lift, gamma and gain primary controls are set in the middle so that the telecine transfer device is adjusted for under exposure and over exposure. Once this setting is correct, the TAF setup is saved to a memory position. Then, using the aforementioned TAF setup as a preset condition, the setup from TAF is recalled and the component waveform from the scanned calibration strip is examined on the waveform monitor. Initially, a coarse calibration is undertaken. Blacks are adjusted from the D-min of the calibration strip (i.e., patch or step #1) by using the lift primary control; whites are adjusted from the D-max (i.e., patch or step #21) by using the gain primary control. Each control adjusts the signal level as seen on the waveform monitor until the prescribed aim voltages are reached. The controls will normally have to be adjusted back and forth until arriving at the aim voltages. Once the aim voltages have been obtained, the gamma primary control is adjusted for the mid tone aim voltage match. Then, in a fine calibration, the lift, gain and gamma controls are adjusted by smaller amounts until all of the patches match their respective aims. This will ordinarily require going back and forth between the lift, gain and gamma controls until all of the patches match their aims.

The use of Keycode™ on all negative film stocks allows for a means of determining which film is presently being scanned on the telecine transfer device. This information is obtained in the film scanning step 106 and used in the LUT selection step 108 to automatically apply the correct 1D LUT to the video stream, thus enabling a proper image to be captured and displayed on the monitor. The 1D LUT will be reloaded as film stocks change throughout the scanning process. A 3x3 matrix can also be applied in the optional matrixing step 110 after the 1D LUT allowing for corrections to color information.

In summary, by following the aforementioned calibration methodology, the telecine transfer device is set up to make a single scan to video without having to rescan the film or make scene by scene adjustments. This is particularly important for purpose of increasing the efficiency and productivity of video dailies. More specifically, this invention provides a "one light" video setup that streamlines the video dailies process by capturing the full dynamic range of the film while automatically loading LUTs for the particular film stock scanned.

## Claims

1. A method for calibrating a motion picture film scanner, said method comprising the steps of:
providing a calibration element composed of a multi-step neutral gray series comprised of a plurality of known density patches that substantially represent the full density vs. exposure range of a photographic element, wherein each density patch corresponds to a prescribed aim voltage;
scanning the calibration element with the motion picture film scanner and generating a signal voltage for each density patch; and
adjusting the motion picture film scanner to bring the signal voltages toward the prescribed aim voltages, thereby generating one or more adjustments that compensate for errors from the prescribed aim voltages and capture substantially the full range of the motion picture film.

2. The method as claimed in claim 1 wherein each density patch represents a unique RGB density corresponding to separate prescribed aim RGB voltages for each density patch, and wherein the steps of scanning the calibration element generates a set of RGB signal voltages for each density patch and adjusting the motion picture scanner brings the RGB signal voltages toward the prescribed RGB aim voltages, thereby generating adjustments that compensate for errors from the prescribed RGB aim voltages.

3. The method as claimed in claim 1 wherein there are a plurality of interacting adjustments to bring the signal voltages toward the prescribed voltages, and the step of adjusting the motion picture film scanner is a process of iteratively adjusting the plurality of adjustments to bring the signal voltages toward the prescribed voltages.

4. The method as claimed in claim 3 wherein the process of iteratively adjusting the plurality of adjustments to bring the signal voltages toward the prescribed voltages is an automatic process.

5. A method for calibrating a motion picture film scanner for a particular film type, said method comprising the steps of:
providing a calibration element composed of a multi-step neutral gray series comprised of a plurality of known density patches that substantially represent the full density vs. exposure range of a photographic element, wherein each density patch corresponds to a prescribed aim voltage;
scanning the calibration element with the motion picture film scanner and generating a signal voltage for each density patch;
adjusting the motion picture film scanner to bring the signal voltages toward the prescribed aim voltages, thereby generating one or more adjustments that compensate for errors from the prescribed aim voltages;
scanning the motion picture film and generating an output signal that captures substantially the full range of the motion picture film; and
applying a custom correction to the output signal of the motion picture film scanner for the particular film type being scanned.

6. The method as claimed in claim 5 wherein each density patch represents a unique RGB density corresponding to separate prescribed aim RGB voltages for each patch, and wherein the steps of scanning the calibration element generates a set of RGB signal voltages for each density patch and adjusting the motion picture scanner brings the RGB signal voltages toward the prescribed RGB aim voltages, thereby generating adjustments that compensate for errors from the prescribed RGB aim voltages.

7. The method as claimed in claim 5 wherein the custom correction is a neutral scale correction provided by a one-dimensional look up table.

8. The method as claimed in claim 5 further comprising the step of applying a color correction provided by a matrix to the output signal of the motion picture film scanner.

9. The method as claimed in claim 5 further comprising the steps of:
storing a plurality of custom corrections for a plurality of different motion picture film types;
determining the film type of the motion picture film being scanned;
selecting a particular custom correction corresponding to the determined film type; and
applying the particular custom correction to the motion picture film scanner for the particular film type being scanned.

10. The method as claimed in claim 5 wherein there are a plurality of interacting adjustments to bring the signal voltages toward the prescribed voltages, and the step of adjusting the motion picture film scanner is a process of iteratively adjusting the plurality of adjustments to bring the signal voltages toward the prescribed voltages.

11. The method as claimed in claim 10 wherein the process of iteratively adjusting the plurality of adjustments to bring the signal voltages toward the prescribed voltages is an automatic process.
